# EUROPÄISCHE PATENTSCHRIFT

(11) **EP 2 241 867 B1**
(45) Veröffentlichungstag und Bekanntmachung des Hinweises auf die Patenterteilung: **21.02.2018**
(21) Anmeldenummer: 10160122.7
(22) Anmeldetag: 16.04.2010
(51) Int. Cl.: G01F 13/00, G01F 11/34, B65D 90/64, B65D 90/66

(54) **Vorrichtung und Anordnung zum Befüllen von Verarbeitungsstationen**
Method and assembly for filling processing stations
Dispositif et agencement destinés au remplissage de postes de traitement

(30) Priorität: 16.04.2009 DE 202009005561 U
(43) Veröffentlichungstag der Anmeldung: 20.10.2010
(73) Patentinhaber: symelt GmbH, 28307 Bremen (DE)
(72) Erfinder: Fass, Wolfgang, 28357 Bremen (DE); Henke, Andreas, 28309 Bremen (DE)
(74) Vertreter: Kuhnen & Wacker

(56) Entgegenhaltungen:
- EP-A1- 0 621 463
- EP-A1- 1 749 769
- WO-A1-03/029762
- DE-A1- 2 443 552
- DE-A1- 19 634 869
- DE-A1- 19 810 959
- GB-A- 2 239 442
- US-A- 4 111 492
- US-A- 4 472 091
- US-A- 5 378 089

## Beschreibung

Die Erfindung betrifft eine Vorrichtung zum Befüllen von Verarbeitungsstationen mit einem pumpfähigen Betriebsstoff nach dem Oberbegriff des Patentanspruchs 1 bzw. 2. Ferner betrifft die Erfindung eine Anordnung zum Befüllen von Verarbeitungsstationen mit einem pumpfähigen Betriebsstoff, mit einem Zentraltank für den Betriebsstoff und mit zwei oder mehr Verarbeitungsstationen und einer Zuführleitung zum Zuführen des Betriebsstoffs zu einer der Verarbeitungsstationen.

Aus der GB 2 239 442 ist eine Abfüllvorrichtung für beispielsweise Instantsuppen und entsprechende Behälter bekannt, bei welcher das Granulat zunächst in einem großen Behälter gelagert wird. Von hier rieselt es durch Schwerkraft in eine Portionierungskammer, in welcher das Granulat portioniert wird. Anschließend fällt das vorportionierte Granulat in den Verkaufsbehälter. Der Transport erfolgt hier durch Schwerkraft, so dass sich weder große Förderhöhen noch Förderstrecken realisieren lassen.

Die US 4,472,091 zeigt eine Vorrichtung zum Anreichern von beispielsweise Sandstrahlsand mit Luft. Der Sandstrahlsand wird zunächst in einer Kammer aufbewahrt, in welcher er bereits mit Druckluft angereichert wird. So dann fällt der Sand wiederum durch Schwerkraft in eine Mischkammer, in welcher er weiter mit Druckluft angereichert wird. Von hier aus wird der Sandstrahlsand durch ein Entnahmerohr zu einer Entnahmestelle gefördert.

Aus der WO 03/006717 A1 ist eine Vorrichtung bekannt, bei welcher ein zu förderndes Aluminiumpulver ebenfalls mit Druckluft angereichert wird.

Die EP 1 749 769 A1 zeigt eine Pulverdosieranlage gemäß Oberbegriff der Ansprüche 1 und 2 bei der das Pulver aus einem Trichter in eine Sendekammer gelangt, aus welcher es mittels Druckluft weitergefördert wird.

Die US 5 378 089 A zeigt schließlich eine Vorrichtung zum Befüllen von Tanks mit Pellets, die mittels Vakuumpumpen aus einem Container entnommen werden.

Obwohl die Erfindung für alle pumpfähigen Betriebsstoffe, also Schüttgüter, gelartige oder pastöse Stoffe oder Flüssigkeiten geeignet ist, ist eine konkrete Anwendung der Erfindung das Bereitstellen von Heißkleber für Heißklebeeinrichtungen beispielsweise in Verpackungsmaschinen. Die Heißklebeeinrichtung ist also in diesem Fall die Verarbeitungsstation. Der Heißkleber wird als Schüttgut, nämlich in Form von Granulat, auch als Pellets bezeichnet, bereitgestellt und in der Regel in Tanks direkt an der Heißklebeeinrichtung gelagert. Jede Heißklebeeinrichtung verfügt über einen eigenen Tank mit einen entsprechendem Fassungsvermögen, in den das Granulat eingefüllt ist. Nachteilig dabei ist, dass die Umgebung des Tanks sehr heiß wird, so dass sich das Personal beim Befüllen des Tanks leicht verbrennen kann. Bei leistungsstarken Heißklebeeinrichtungen muss der Tank darüber hinaus sehr häufig nachgefüllt werden, was einen entsprechenden Personaleinsatz erfordert. Auch besteht die Gefahr, dass nicht ausreichend Granulat im Tank vorhanden ist, was zu Fehlstellen in der Verklebung und zu Produktionsausschuss sowie zu Produktionsausfällen führen kann. Ferner kommt es vor, dass beim Nachfüllen des Tanks Granulat verschüttet und die Umgebung damit verschmutzt wird. Dabei ist zu berücksichtigen, dass Schüttgut aufgrund von Abrieb immer auch mit Staub versetzt ist, der zudem die Umgebung verschmutzt. Darüber hinaus kann verschüttetes Granulat mit heißen Teilen der Heißklebeeinrichtung in Berührung kommen und sodann schmelzen. Hierdurch kommt es zu weiteren Verschmutzungen an der Heißklebeeinrichtung. Dieses ist immer unerwünscht. Bei Verpackungsmaschinen für Lebensmittel sind Verschmutzungen besonders bedenklich.

Zur Vermeidung dieser Nachteile wurde in der Praxis bereits das Granulat in Fässern bereitgestellt und der Tank der Heißklebeeinrichtung aus diesem Fass über eine entsprechende Nachfüllleitung nachgefüllt. Jedem Fass ist dabei genau ein Tank zugeordnet. Zwar ist der Personaleinsatz hier reduziert, da das Fass ein größeres Fassungsvolumen als der Tank hat. Das Personal muss aber immer noch überwachen, dass die Fässer rechtzeitig ausgewechselt werden. Darüber hinaus ist die Förderstrecke, über welche sich das Granulat fördern lässt, bei dieser Variante stark begrenzt, so dass die Fässer nah an der jeweiligen Heißklebeeinrichtung aufgestellt werden müssen. Dieses sind oft schwer zugängliche Stellen. Darüber hinaus hat sich in der Praxis gezeigt, dass das Granulat in den Fässern leicht verklumpt.

Hiervon ausgehend liegt der Erfindung das Problem zugrunde, eine Vorrichtung und eine Anordnung zum Befüllen von Verarbeitungsstationen mit pumpfähigem Betriebsstoff zu schaffen, durch die eine permanente und ausreichende Versorgung der Verarbeitungsstation mit dem Betriebsstoff bei geringstmöglichem Aufwand und größtmöglicher Sauberkeit gewährleistet ist. Gleichzeitig soll die Sicherheit des Bedienpersonals verbessert, insbesondere die Gefahr von Verbrennungen ausgeschlossen werden. Ferner sollen größere Förderstrecken von über 9 m und einer Förderhöhe von mehr als 2,5 m überbrückbar sein, so dass eine Zuführleitung auch mit Gabelstaplern unterfahren werden kann.

Zur Lösung dieses Problems ist die erfindungsgemäße Vorrichtung durch die Merkmale des Anspruchs 1 bzw. 2 gekennzeichnet. Die erfindungsgemäße Anordnung ist zur Lösung dieses Problems durch eine solche Vorrichtung gekennzeichnet. Dadurch, dass der Betriebsstoff zunächst von dem Zentraltank an eine Übergabekammer übergeben, also gleichsam eine Vorportionierung des Betriebsstoffes durchgeführt wird, lassen sich auch größere Förderstrecken überwinden. Aus diesem Grund kann der Zentraltank auch an einer leicht zugänglichen Stelle angeordnet werden, so dass sich auf einfache Weise nachfüllen lässt. Deshalb und aufgrund des größeren Fassungsvolumens lässt sich der Zentraltank nahezu verschmutzungsfrei nachfüllen und ist entfernt von den Verarbeitungsstationen, also vorwiegend den Heißklebestationen, angeordnet, so dass die Verletzungsgefahr, insbesondere Verbrennungsgefahr, vermieden ist. Eventuell dennoch auftretende Verschmutzungen passieren entfernt von der Verarbeitungsstation und können leicht entfernt werden. Dabei kann auch genau eine Verarbeitungsstation vorhanden sein, die aus dem Zentraltank versorgt wird. Die Erfindung ist aber in erster Linie dafür vorgesehen, mehrere Verarbeitungsstationen, nach dem obigen Beispiel Heißklebeeinrichtungen, aus einem gemeinsamen Zentraltank mit dem Betriebsstoff, dem Granulat des Heißklebers zu versorgen. Auf diese Weise braucht nur noch ein zentraler Tank überwacht zu werden, wodurch der Bedienaufwand erheblich reduziert ist. Zum Zuführen des Druckmittels ist erfindungsgemäß eine Druckmitteldüse, insbesondere eine Venturidüse, auf das Zuführrohr gerichtet sein. Der Betriebstoff wird dann gut aus der Übergabekammer in das Zuführrohr ausgeblasen.

Besonders vorteilhaft ist es, wenn das Fassungsvolumen der Übergabekammer auf das Fassungsvolumen eines Tanks an der Verarbeitungsstation abgestimmt ist. Der Betriebsstoff lässt sich dann besonders zuverlässig über größere Förderstrecken von der Übergabekammer an den Tank der Verarbeitungsstation fördern, da kein unnötiges Luftvolumen in der Übergabekammer vorhanden ist.

Auf besonders einfache Weise lässt sich der Betriebsstoff von dem Zentraltank der jeweiligen Übergabekammer zuführen, indem im Boden des Zentraltanks eine Öffnung angeordnet ist. Der Betriebsstoff rieselt bzw. fließt dann mittels Schwerkraft durch die Öffnung in die Übergabekammer. Zum Vordosieren der Betriebsstoffmenge sollte die Öffnung am Boden verschließbar sein. Dabei ist vorzugsweise jeder Übergabekammer eine Schließeinrichtung zum Öffnen und Schließen der Öffnung im Boden des Zentraltanks zugeordnet, so dass jede Übergabekammer bzw. jede Öffnung individuell ansteuerbar ist.

Zum Fördern des Betriebsstoffs aus der Übergabekammer zur Verarbeitungsstation dient vorzugsweise ein Druckmittel, insbesondere Druckluft. Es sind aber auch andere flüssige oder gasförmige Druckmittel denkbar. Welches Druckmittel eingesetzt wird, hängt auch von der Art des Betriebsstoffes ab. So können bei brennbaren Betriebsstoffen auch inerte Gase oder Flüssigkeiten zum Einsatz kommen. Die Beaufschlagung der Übergabekammer mit dem Druckmittel kann dabei stoßartig erfolgen. Auf diese Weise lässt sich der Betriebsstoff auf besonders einfache Weise gleichsam aus der Übergabekammer ausblasen und der Verarbeitungsstation bzw. deren Tank zuverlässig zuführen. Die Übergabekammer sollte dabei so lange mit dem Druckmittel beaufschlagt sein, bis sie vollständig entleert ist. Dieses gelingt besonders einfach mit einer Zeitsteuerung. Es sind aber auch andere Steuerungen geeignet, wie beispielsweise ein Volumen oder Gewichtssteuerung. Auch ist es denkbar die Druckmittelbeaufschlagung über einen Fotosensor oder eine Kamera zu steuern, die beispielsweise durch ein Schauglas in der Zuführleitung zwischen Übergabekammer und Tank überwacht, ob noch Betriebsstoff durch die Zuführleitung fließt.

Die Übergabekammern sind nach einer auch unabhängig denkbaren konstruktiven Ausgestaltung der Erfindung in wenigstens zwei Spalten hintereinander und wenigstens zwei Zeilen nebeneinander angeordnet, wobei die Übergabekammern wenigstens einer der Spalten zu einer Übergabekassette zusammengefasst sind. Die Begriffe "Spalten" und "Zeilen" sind dabei beliebig und austauschbar. Durch diese Weiterbildung sind mehrere Übergabekammern zu einer Übergabekassette zusammengefasst, was die Montage und gegebenenfalls auch den Austausch, falls das Volumen der Übergabekammer an ein verändertes Tankvolumen an der Verarbeitungsstation angepasst werden muss, erleichtert.

Weist der Boden einen Sumpf auf, so kann der Sumpf auch mittig im Boden der Übergabekammer, aber auch außermittig, zum Beispiel randseitig, vorgesehen sein. Der Sumpf sollte als Sackbohrung ausgebildet sein und einen Durchmesser aufweisen, der etwa dem Innendurchmesser der Entnahmeöffnung bzw. des Zuführrohres entspricht. Auch hierdurch lässt sich der Betriebstoff gut aus der Übergabekammer ausblasen. Mit einer so ausgerüsteten Versuchsanlage ließen sich Förderstrecken von etwa 100 m und ein Höhenunterschied von bis zu 25 m überwinden. Auch diese alternative Ausgestaltung der Übergabekammer ist unabhängig von der erfindungsgemäßen Vorrichtung bzw. Anordnung denkbar.

Nach einer anderen Weiterbildung der Erfindung ist dem Zentraltank eine Rütteleinrichtung zugeordnet. Hierdurch wird der im Zentraltank befindliche Betriebsstoff ständig aufgerüttelt. Dieses ist insbesondere bei einem Granulat, wie dem Heißkleber, als Betriebsstoff besonders vorteilhaft. Ein Verklumpen des Betriebsstoffs wird hierdurch vermieden.

Der Zentraltank lässt sich auch mittels Trennwänden in zwei oder mehr Untertanks teilen. Hierdurch lassen sich mit ein und derselben Vorrichtung auch unterschiedliche Betriebsstoffe zwischenlagern und für die Verarbeitungsstationen bereithalten.

Um den Boden des Zentraltanks von dem Gewicht des darin gelagerten Betriebsstoffs zu entlasten, können in dem Zentraltank ein oder mehrere Siebe angeordnet sein. Das Sieb nimmt einen Teil des Gewichtes des Betriebsstoffes auf und entlastet so den Boden. Obwohl diese auch schräg zum Boden verlaufen können, ist eine Anordnung parallel zum Boden bevorzugt.

Gemäß der erfindungsgemäßen Anordnung können dem Zentraltank zwei oder mehr Übergabekammern zugeordnet sein, wobei jeder Übergabekammer jeweils eine Verarbeitungsstation zugeordnet ist. Dieses kann dadurch erfolgen, dass von jeder der Übergabekammern immer eine konkrete Zuleitung für den Betriebsstoff zu einer konkreten Verarbeitungsstation geführt ist. Es ergibt sich dabei also eine sternförmige Verbindung der Verarbeitungsstationen mit dem Zentraltank. Es ist aber auch denkbar, dass der Zentraltank mit nur einer Übergabekammer versehen ist, der dann zwei oder mehr Verarbeitungsstationen zugeordnet sind. In diesem Fall wird die Übergabekammer mittels Weichen in der Zuleitung jeweils mit einer konkreten Verarbeitungsstation verbunden, so dass immer nur ein konkreter Strang zwischen der Übergabekammer und der jeweiligen Verarbeitungsstation geschaltet ist. Diese Variante kann als Baumstruktur bezeichnet werden, bei der sich, ausgehend von der Übergabekammer als Stamm, mehrere Verästelungen ergeben. Selbstverständlich ist es bei der Baumstruktur auch möglich, dem Zentraltank zwei oder mehr Übergabekammern zuzuordnen, so dass dann von jeder Übergabekammer eine eigene Baumstruktur ausgeht. Denkbar ist es auch, Querverbindungen unter den einzelnen Baumstrukturen vorzusehen, so dass gegebenenfalls auch zwei innerhalb der einen Baumstruktur angeordneten Verarbeitungsstationen gleichzeitig mit Betriebsstoff versorgt werden können, falls dieses erforderlich werden sollte. Wichtig ist dabei nur, wie oben schon angegeben, dass zu jedem Zeitpunkt immer nur ein ganz konkreter Weg von einer der Übergabekammern zu einer ganz bestimmten Verarbeitungsstation für den Betriebsstoff geschaltet ist. Dieses kann im einfachsten Fall durch eine Ringleitung realisiert werden, welche von einer Übergabekammer ausgeht und bei einer anderen Übergabekammer endet. Es wird dann immer ein Strang von der zu befüllenden Verarbeitungsstation zur nächst gelegenen Übergabekammer geschaltet - einmal rechtsherum und einmal links herum, so dass immer zwei Verarbeitungsstationen gleichzeitig nachgefüllt werden können.

Nach einer Weiterbildung der erfindungsgemäßen Anordnung ist vorgesehen, dass der Betriebsstoff von der Übergabekammer zunächst einer Einrichtung zum Abscheiden des Druckmittels, also beispielsweise der Druckluft, zugeführt und von dort drucklos in den Tank der Verarbeitungsstation gefördert wird. Bei dem eingangs genannten bekannten Verfahren, bei dem das Granulat des Heißklebers aus dem Fass mittels Druckluft in den Tank der Verarbeitungsstation gefördert worden ist, hat dieses auch zu einer Kühlung der Heißklebeeinrichtung geführt. Hierdurch ist teilweise die Heißklebeeinrichtung unterhalb des Schmelzpunktes des Heißklebers gekühlt worden, was zu Störungen im Betriebsablauf geführt hat. Da nach der vorliegenden Weiterbildung die Druckluft bereits vorher abgeschieden ist und der Betriebsstoff drucklos in den Tank rieselt oder fließt, ist diese Gefahr vermieden.

Die Erfindung wird nachfolgend anhand eines in der Zeichnung dargestellten Ausführungsbeispiels näher erläutert. In der Zeichnung zeigen:
- Fig. 1: ein erstes Ausführungsbeispiel einer Anordnung mit den Erfindungsmerkmalen in schematischer Seitenansicht,

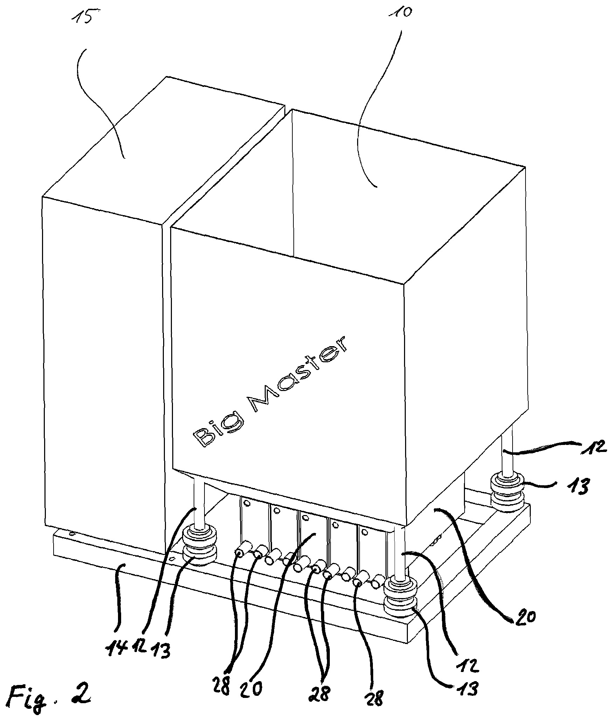

- Fig. 2: eine erste Vorrichtung mit den Erfindungsmerkmalen in perspektivischer Ansicht,

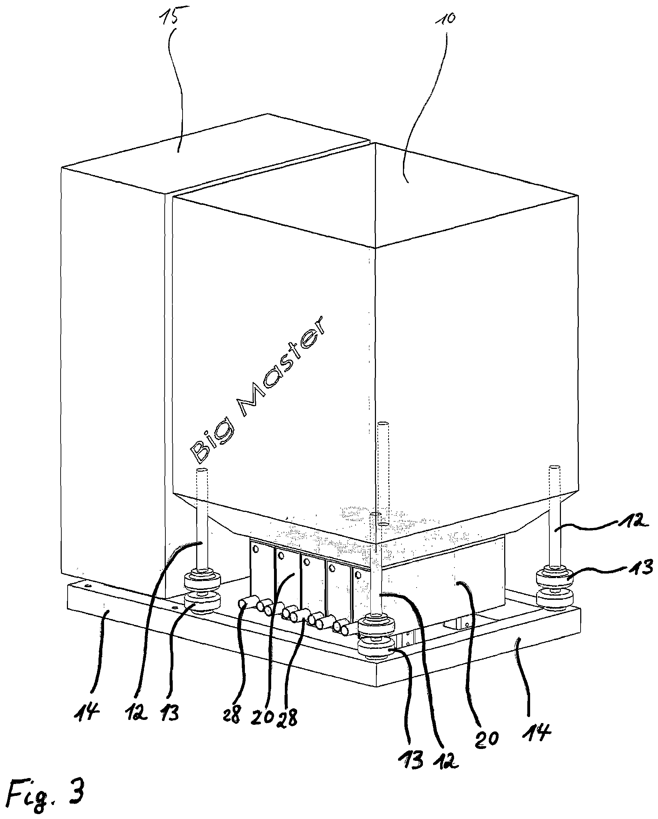

- Fig. 3: die Vorrichtung gemäß Fig. 2 in einer detailierteren perspektivischen Ansicht,
- Fig. 4: die Vorrichtung gemäß Fig. 2 in perspektivischer Ansicht teilweise freigeschnitten,
- Fig. 5: die Vorrichtung gemäß Fig. 2 in Draufsicht,
- Fig. 6: eine Übergabekassette mit zwei Übergabekammern für die Vorrichtung gemäß Fig. 2,
- Fig. 7: eine Entlüftungseinrichtung für die Anordnung gemäß Fig. 1 in einer perspektivischen Schnittdarstellung,
- Fig. 8: eine zweite Vorrichtung mit den Erfindungsmerkmalen in perspektivischer Ansicht, teilweise geschnitten, und
- Fig. 9: eine Übergabekammer für die Vorrichtung gemäß Fig. 8 in perspektivischer Ansicht, teilweise geschnitten,
- Fig. 10: eine weitere Übergabekammer für eine Vorrichtung mit den Erfindungsmerkmalen in Draufsicht,
- Fig. 11: die Übergabekammer gemäß Fig. 10 im Vertikalschnitt in der Ebene XI-XI,
- Fig. 12: eine weitere Vorrichtung mit den Erfindungsmerkmalen in Unteransicht mit Übergabekammern gemäß Fig. 10,
- Fig. 13: ein weiteres Ausführungsbeispiel für eine Anordnung mit den Erfindungsmerkmalen in schematischer Seitenansicht,
- Fig. 14: eine Entlüftungseinrichtung für die Anordnung gemäß Fig. 13 in einer perspektivischen Ansicht,
- Fig. 15: einen Deckel für einen Betriebsstofftank einer Verarbeitungsstation in perspektivischer Draufsicht.

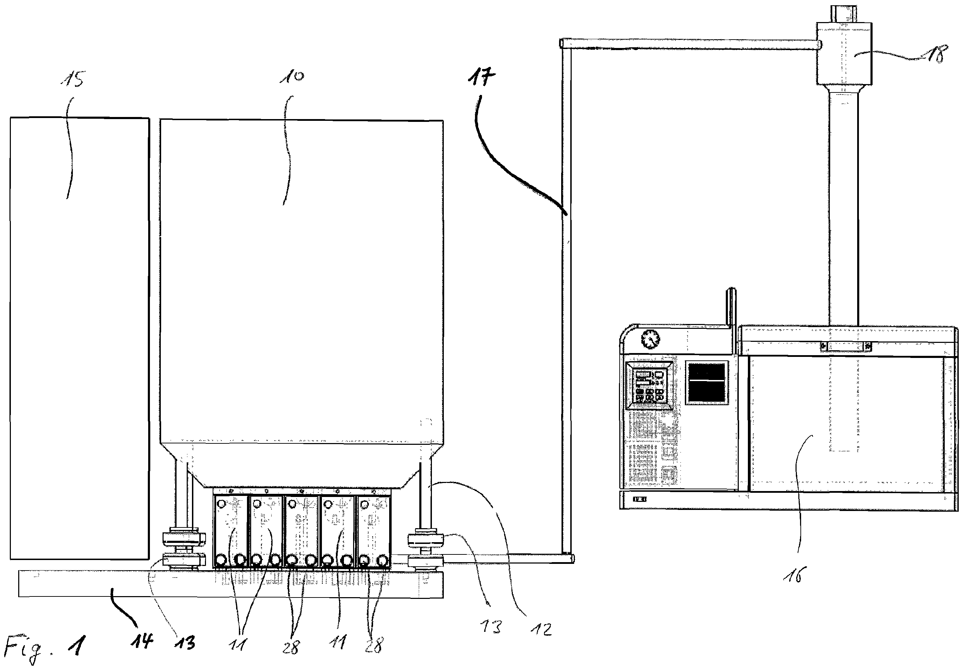

Die in Fig. 1 gezeigte Anordnung zeigt einen Zentraltank 10 mit unterhalb des Zentraltanks angeordneten Übergabekassetten 11. Der Zentraltank 10 ist auf Ständern 12 mittels Schwingungsdämpfern 13 auf einem Grundrahmen 14 gelagert. Ferner ist dem Zentraltank 10 ein Steuerschrank 15 für die Steuerung der Vorrichtung zugeordnet.

In Fig. 1 ist stellvertretend für eine beliebige Anzahl von Verarbeitungsstationen eine Verarbeitungsstation, nämlich eine Heißklebeeinrichtung 16, gezeigt. Mittels einer Zuführleitung 17 wird ein Betriebsstoff, im vorliegenden Fall ein Granulat eines Heißklebers, zunächst einer Entlüftungseinrichtung 18, deren Sinn noch weiter unten erläutert wird, zugeführt. Diese Entlüftungseinrichtung 18 befindet sich oberhalb der Heißklebeeinrichtung 16, konkret oberhalb eines Tanks derselben, so dass der Betriebsstoff drucklos von der Entlüftungseinrichtung 18 in den Tank der Heißklebeeinrichtung 16 rieseln oder fließen kann.

Unterhalb des Zentraltanks 10 sind mehrere, im vorliegenden Fall fünf, Übergabekassetten 20 vorgesehen. Jede Übergabekassette 20 verfügt über zwei Übergabekammern 21. Im vorliegenden Fall sind also insgesamt zehn Übergabekammern 21 vorgesehen, wobei deren Anzahl selbstverständlich beliebig ist. So kann jede Übergabekassette 20 auch über drei oder mehr hintereinander oder nebeneinander angeordnete Übergabekammern 21 verfügen. Darüber hinaus kann auch die Zahl der Übergabekassetten 20 variiert und den jeweiligen Bedürfnissen angepasst werden.

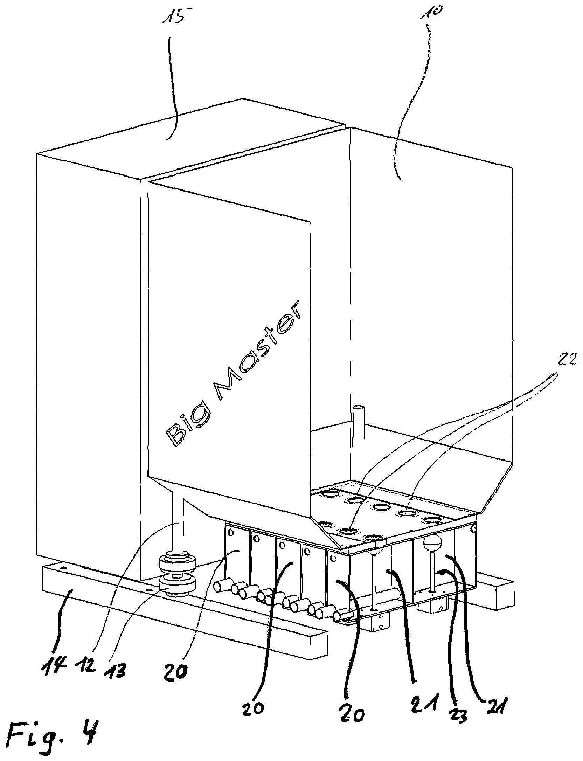

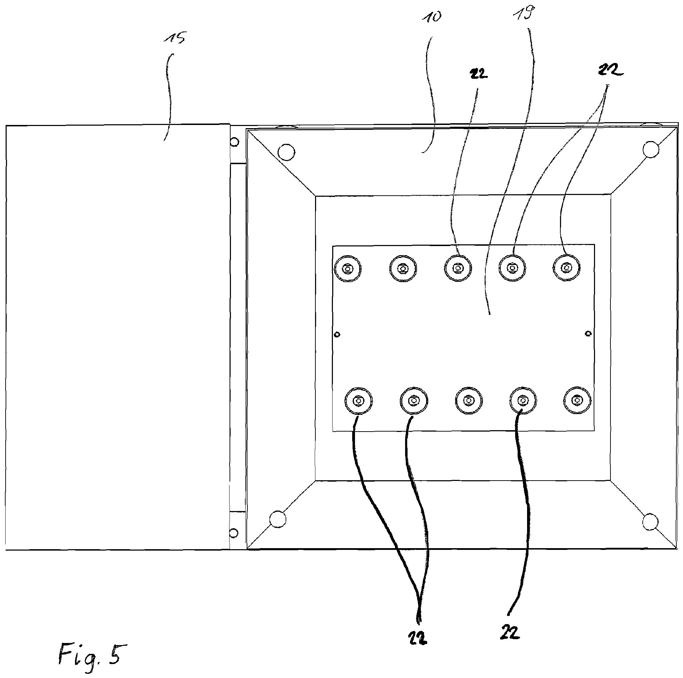

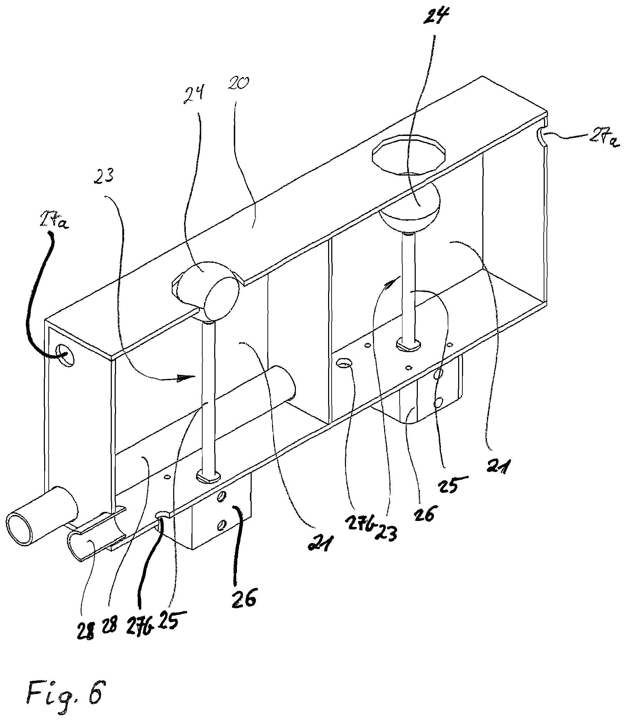

Wie insbesondere in Fig. 4 und 5 gut zu erkennen ist, sind im Boden 19 des Zentraltanks 10 Öffnungen 22 vorgesehen. Jeder Übergabekammer 21 ist dabei eine Öffnung 22 zugeordnet. Die Öffnungen 22 sind durch jeweils eine Schließeinrichtung 23 verschließbar. Die Schließeinrichtung 23 verfügt über einen, im vorliegenden Fall kugelförmigen, Schließstopfen 24, welcher über eine Kolbenstange 25 mit einem geeigneten Betätigungsorgan, im vorliegenden Fall einem Pneumatikzylinder 26, verbunden ist. In der Darstellung gemäß Figur 6 ist die linke Schließeinrichtung 23 in Schließstellung und die rechte Schließeinrichtung 23 in geöffneter Stellung dargestellt.

Das Betätigungsorgan ist vorzugsweise so ausgebildet, dass es in energielosem Zustand die Schließstopfen 24 in Schließstellung bringt. Hierdurch ist nicht nur ein Failsafe-Verhalten gegeben, sondern die Vorrichtung braucht bei Betriebsruhe, etwa am Wochenende, nicht mit Energie (Druckluft) versorgt zu werden.

Durch das Öffnen der Schließeinrichtung 23 gelangt der Betriebsstoff zunächst aus dem Zentraltank 10 in die jeweils zugehörige Übergabekammer 21. Das Volumen der Übergabekammer 21 ist auf das Volumen des Tanks der ihr zugeordneten Verarbeitungsstation abgestimmt. Die Übergabekammer 21 wird nun durch entsprechende Druckluftöffnungen 27a und 27b mit Druckluft beaufschlagt und dadurch der Betriebsstoff aus der Übergabekammer 21 ausgeblasen. Jeder Übergabekammer ist ein Zuführrohr 28 zugeordnet, an welchem die jeweils zugehörige Zuführleitung 17 anschließbar ist. Wie in Fig. 6 gut zu erkennen ist, ist das Zuführrohr 28 der in der Darstellung gemäß Fig. 6 rechten Übergabekammer 21 durch die linke Übergabekammer 21 hindurchgeführt. Auf diese Weise lassen sich alle Zuführleitungen 17 an derselben Seite der Übergabekassetten 20 anschließen.

In den Druckluftöffnungen 27b können nach einer alternativen, hier nicht näher dargestellten Ausführungsform Düsen angeordnet sein. Eine derartige Düse ist als eine Venturi-Düse ausgebildet. Hierbei ist der Austritt der Düse in Richtung auf das Zuführrohr 28 ausgerichtet. Hierdurch ist ein besonders effektives Ausblasen des Betriebsstoffes aus der Übergabekammer 21 sowie eine zuverlässige Durchführung durch das Zuführrohr 28 und die Zuführleitung 17 gewährleistet.

Durch die in die Übergabekammer 21 eingeblasene Druckluft wird der Betriebsstoff mit hoher Geschwindigkeit durch das Zuführrohr 28 und die Zuführleitung 17 in die Entlüftungseinrichtung 18 geblasen. In der Entlüftungseinrichtung 18 wird die Druckluft abgeschieden, so dass, wie bereits eingangs dargelegt, der Betriebsstoff drucklos in den Tank der Verarbeitungsstation, vorliegend der Heißklebeeinrichtung 16, gelangen kann. Hierdurch wird ein ungewolltes Abkühlen der Heißklebestation durch die Druckluft vermieden.

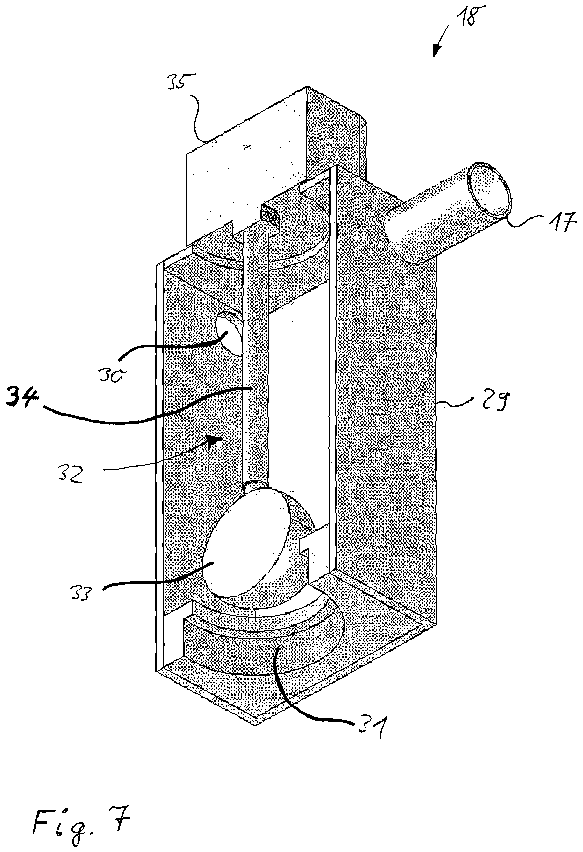

Wie der Fig. 7 zu entnehmen ist, weist die Entlüftungseinrichtung 18 ein Gehäuse 29 auf. An einem oberen Ende des Gehäuses 29 führt die Zuführleitung 17 den Betriebsstoff in einen von dem Gehäuse 29 gebildeten Innenraum. Weiter weist das Gehäuse 29 am oberen Ende und von der Zuführleitung 17 abgewandt eine Entlüftungsöffnung 30 auf. Durch die Entlüftungsöffnung 30 entweicht die für die Beförderung des Betriebsstoffes verwendete Druckluft aus der Entlüftungseinrichtung 18. Die Entlüftungsöffnung 30 ist auf hier nicht näher dargestellte Weise mit einem geeigneten Filtermittel abgedeckt, um ein unerwünschtes Austreten von Betriebsstoff aus der Entlüftungsöffnung 30 zu verhindern.

Am unteren Ende des Gehäuses 29 weist die Entlüftungseinrichtung 18 eine Öffnung 31 auf. Die Öffnung 31 ist mittels einer Schließeinrichtung 32 verschließbar. Die Schließeinrichtung 32 entspricht in Aufbau und Funktionsweise der Schließeinrichtung 23 der Übergabekammern 21. Insofern wird auf die entsprechenden Ausführungen verwiesen. Die Schließeinrichtung 32 weist einen hier kugelförmig ausgebildeten Schließstopfen 33 auf. Der Schließstopfen 33 ist mittels einer Kolbenstange 34 mit einem Betätigungsorgan, nämlich einem Pneumatikzylinder 35, verbunden. In der Darstellung gemäß Fig. 7 ist die Schließeinrichtung 32 in der geöffneten Stellung gezeigt.

Im Betrieb ist der Schließstopfen 33 zunächst in der Schließstellung, so dass die Öffnung 31 verschlossen ist. Sodann wird der Innenraum des Gehäuses 29 mit Betriebsstoff über die Zuführleitung 17 befüllt. Hierbei tritt die Druckluft über die Entlüftungsöffnung 30 aus der Entlüftungseinrichtung 18 aus. Anschließend wird der Schließstopfen 33 mittels der Kolbenstange 34 und dem Pneumatikzylinder 35 in die geöffnete Stellung verfahren, so dass die Öffnung 31 mindestens teilweise freigegeben wird. Hierdurch fällt der Betriebsstoff aufgrund der wirkenden Schwerkraft in die Heißklebestation 16.

Das Betätigungsorgan 35 ist insbesondere derart ausgebildet, dass es in energielosem Zustand den Schließstopfen 33 in Schließstellung bringt, wodurch einerseits ein Failsafe-Verhalten gegeben ist und andererseits die Entlüftungseinrichtung 18 bei Betriebsruhe nicht mit Energie versorgt werden muss.

Der Tank jeder Heißklebestation 16 ist mit einem entsprechenden Füllstandsensor versehen. Sobald der Füllstandsensor einen kritischen Restfüllstand in dem Tank meldet, wird durch die Steuereinheit 15 zunächst die dieser Heißklebestation 16 zugeordnete Übergabekammer 21 mit dem Füllstoff, also dem Granulat des Heißklebers, gefüllt und dadurch das Granulat vorportioniert. Hierzu wird die Schließeinrichtung 23 der jeweiligen Übergabekammer 21 geöffnet, so dass das Granulat in die Übergabekammer 21 rieselt. Sobald ein auf das Tankvolumen abgestimmtes Granulatvolumen in die Übergabekammer 21 gerieselt ist, wird die zugehörige Öffnung 22 wieder durch die Schließeinrichtung druckdicht verschlossen und das Granulat kann aus der Übergabekammer 21 ausgeblasen und dadurch dem Tank der Heißklebestation 16 in der oben beschriebenen Weise zugeführt werden. Dabei wird die Übergabekammer 21 zeitgesteuert so lange mit Druckluft beaufschlagt, bis die gesamte Granulatmenge aus der Übergabekammer 21 in die Entlüftungsstation befördert ist.

Um ein Verklumpen des Granulats in dem Zentraltank 10 zu vermeiden, ist dem Zentraltank 10 eine Rütteleinrichtung zugeordnet, welche das Granulat immer aufrüttelt. Aus diesem Grund ist der Zentraltank mittels Schwingungsdämpfern 13 auf dem Grundrahmen 14 gelagert.

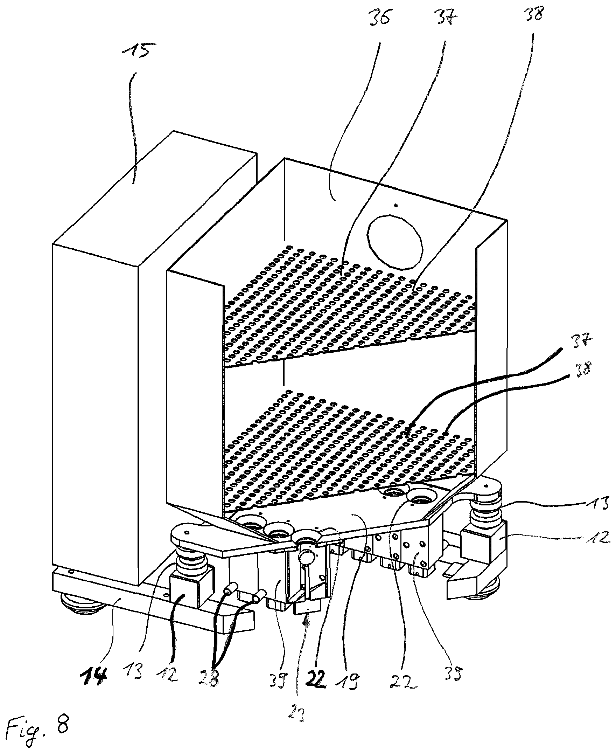

Der Zentraltank 36 gemäß Fig. 8 ist im Prinzip genauso aufgebaut, wie der Zentraltank 10 gemäß dem vorstehend beschriebenen Ausführungsbeispiel. Gleiches ist deshalb mit denselben Bezugsziffern bezeichnet. In dem Zentraltank 36 sind im vorliegenden Fall zwei Siebe 37 angeordnet, die sich hier parallel zum Boden 19 erstrecken. Die Siebe 37 sind mit kleinen Löchern 38 versehen, deren Durchmesser auf die Größe des in dem Zentraltank 36 gelagerten Granulats abgestimmt ist, so dass das Granulat gut hindurchrieseln kann. Sinn dieser Siebe 37 ist es, den Boden 19 und damit die Schließstopfen 34 in den Öffnungen 22 vom Gewicht des in dem Zentraltank 36 eingefüllten Granulats zu entlasten. Zahl und Anordnung der Siebe 37 sind deshalb von dem Gewicht des eingefüllten Granulats und der Höhe des Zentraltanks 36 abhängig.

Ferner sind bei dem Ausführungsbeispiel gemäß Fig. 8 Übergabekammern 39 nicht zu Übergabekassetten zusammengefasst. Jeder Öffnung 22 im Boden 19 des Zentraltanks 36 ist eine gesonderte Übergabekammer 39 zugeordnet. Diese ist in der bereits beschriebenen Weise mit einer Schließeinrichtung 23 zum Verschließen der Öffnung 22 versehen.

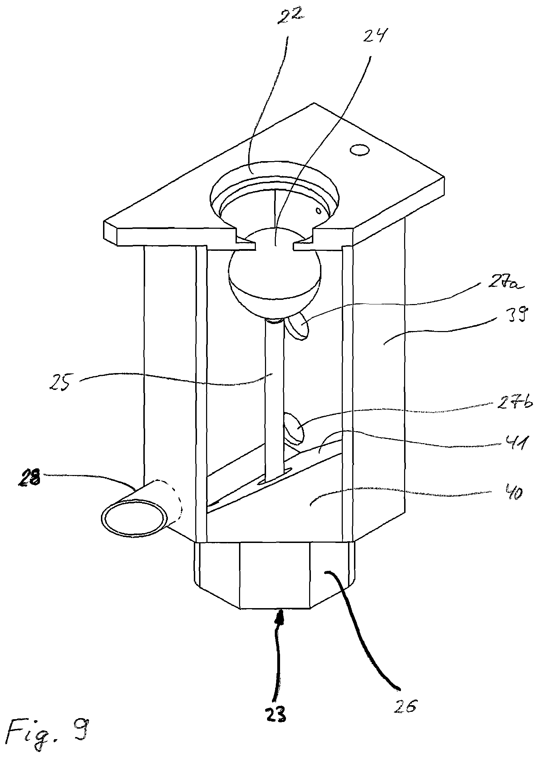

Die Übergabekammer 39 ist in Fig. 9 noch einmal genauer gezeigt. An ihrer dem Zuführrohr 28 gegenüberliegenden Seite weist die Übergabekammer wieder Druckluftöffnungen 27 zum Beaufschlagen der Übergabekammer 39 mit Druckluft auf. Die Übergabekammer 39 wird somit in der gleichen Weise entleert, wie die Übergabekammer 21 gemäß dem vorstehend beschriebenen Ausführungsbeispiel. Abweichend von der Übergabekammer 21 weist die Übergabekammer 39 jedoch einen keilförmig ausgebildeten Einsatz 40 auf, so dass an der der Öffnung 22 gegenüberliegenden Unterseite der Übergabekammer 39 ein rampenartig abfallender Boden 41 entsteht. Zuführrohr 28 und die untere Druckluftöffnung 27b sind im vorliegenden Fall leicht seitlich in der Übergabekammer 39 und an deren unterem, der Öffnung 22 gegenüberliegenden Ende angeordnet. Der Boden 41 fällt nun schräg zu dieser Seite hin ab. Dadurch wird das Entleeren der Übergabekammer 39 weiter erleichtert.

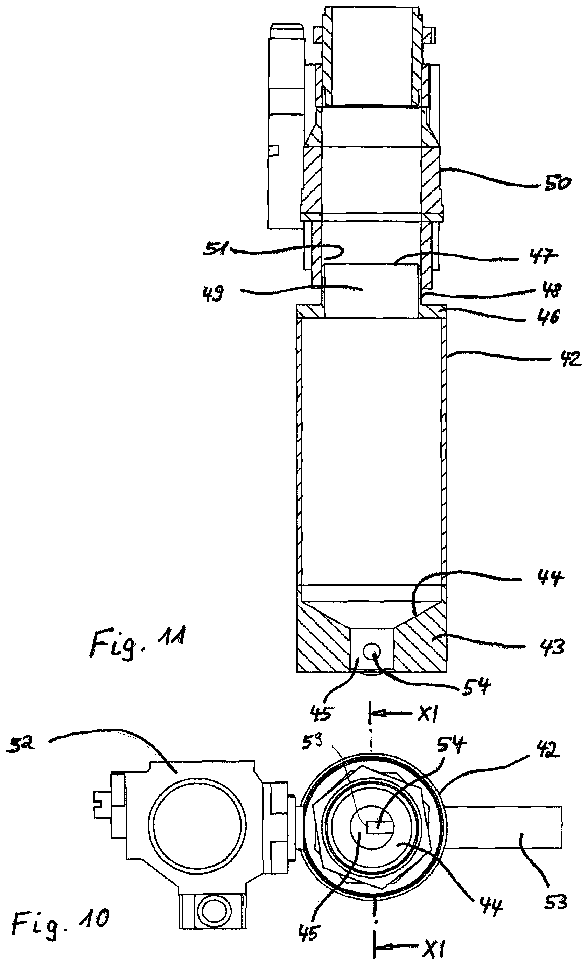

In Fig. 10 und 11 ist eine weitere Variante einer Übergabekammer 42 gezeigt. Diese ist als zylindrischer, konkret kreiszylindrischer, Hohlkörper ausgebildet. Die Übergabekammer 42 weist einen Boden 43 auf, der eine Bodenfläche 44 bildet, die sich zur Mitte hin trichterartig vertieft und dann in einen mittigen, im vorliegenden Fall als Sackbohrung ausgebildeten Sumpf 45 übergeht. Nach oben, also an einem dem Boden 43 gegenüberliegenden Ende ist die Übergabekammer 42 durch einen Deckel 46 verschlossen, der einen Schraubstutzen 47 aufweist. Der Schraubstutzen 47 ist im vorliegenden Fall an seiner Außenseite mit einem Bolzengewinde 48 versehen, kann zusätzlich oder alternativ aber auch an seiner Innenseite mit einem Mutterngewinde ausgebildet sein. Ferner weist der Schraubstutzen 47 eine Durchgangsbohrung 49 auf, die mit dem inneren Hohlraum der Übergabekammer 42 kommuniziert.

Auf den Schraubstutzen 47 ist ein Kugelhahn 50 aufgeschraubt, der zu diesem Zweck ein zum Bolzengewinde 48 des Schraubstutzens 47 kommunizierendes Mutterngewinde 51 aufweist. Sollte der Schraubstutzen 47 ein Innengewinde aufweisen, wird der Kugelhahn 50 selbstverständlich mit einem entsprechenden Bolzengewinde versehen. Auch sind alle anderen bekannten Verbindungstechniken, wie zum Beispiel ein Bajonettverschluss zwischen Übergabekammer 41 und Kugelhahn 50, möglich. Im Übrigen ist der Kugelhahn in der handelsüblichen Weise ausgebildet und über eine motorische Betätigungseinrichtung 52 betätigt.

Am Boden 43 der Übergabekammer 42 ist ein Austrittsrohr 53 angeordnet, das mit einer Druckluftdüse 54 kommuniziert, die im Sumpf 45 des Bodens 43 angeordnet ist. Die Druckluftdüse 54 kann als Venturidüse ausgebildet sein und ragt mit ihrer Öffnung bis in das Austrittsrohr 53 hinein. Das in Fig. 10 innerhalb des Sumpfes 45 sichtbare Ende 59 knickt nach unten ab und kommuniziert mit einem Druckluftanschluss. Der Durchmesser des Sumpfes 45 ist etwa genauso groß wie der Innendurchmesser des Austrittsrohres 53 bemessen.

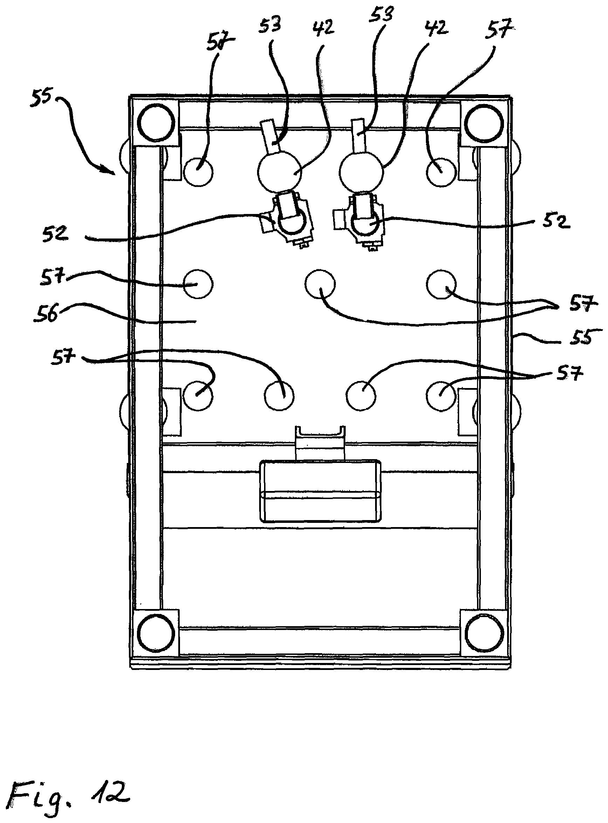

Fig. 12 zeigt eine Unteransicht eines Zentraltanks 55, der mit den Übergabekammern 42 ausgerüstet ist. Im Boden 58 des Zentraltanks 55 ist eine Anzahl von Öffnungen 57 vorgesehen, an die die Übergabekammern 42 über die Kugelhähne 50 anschließbar sind. Ferner ist in Fig. 12 eine Rütteleinrichtung 60 erkennbar, mit welcher auch dieser Zentraltank 55 ausgerüstet ist.

Auch bei der Variante gemäß Fig. 11 bis 12 wird die Übergabekammer 42 mit einem Volumen des Granulats befüllt, das dem Volumen entspricht, das von dem Tank der Heißklebestation 16 aufgenommen werden kann. Zu diesem Zweck wird der Kugelhahn 50 zeitgesteuert oder über entsprechende Füllstandssensoren in der Übergabekammer 42 geöffnet, bis der entsprechende Füllstand in der Übergabekammer 42 erreicht und der Kugelhahn 50 dann wieder geschossen ist. Nun wird ein Druckstoß auf die Druckluftdüse 54 gegeben. Die Dauer des Druckstoßes ist wieder zeitgesteuert so bemessen, dass die Übergabekammer 42 vollständig entleert ist und das Granulat zum Tank der Heißklebestation 16 gefördert wird. Durch den Druckstoß wird das Granulat, wie oben anhand der Übergabekammern 21 und 39 beschrieben, aus der Übergabekammer 42 abgefördert. Dabei reißt die Strömung in der Übergabenkammer aufgrund der besonderen Gestaltung des Bodens 43 in der Übergabekammer 42 ab, so dass das Granulat auf eine hohe Geschwindigkeit beschleunigt wird. Bei einer mit dieser Übergabekammer 42 ausgerüsteten Versuchsanordnung konnte das Granulat etwa 100 m weit gefördert werden, wobei ein Höhenunterschied von 25 m überwunden werden konnte.

Die erfindungsgemäße Vorrichtung und die erfindungsgemäße Anordnung sind vorstehend anhand des Beispiels der Versorgung von Heißklebeeinrichtungen mit Heißklebegranulat, also einem Schüttgut, beschrieben worden. Die Erfindung eignet sich aber für alle pumpfähigen Betriebsstoffe, also nicht nur für Schüttgüter, sondern auch für gelartige oder pastöse Stoffe und Flüssigkeiten. Auch eignen sich die erfindungsgemäße Vorrichtung und die erfindungsgemäße Anordnung für jede andere Art von Verarbeitungsstationen als Heißklebeeinrichtung.

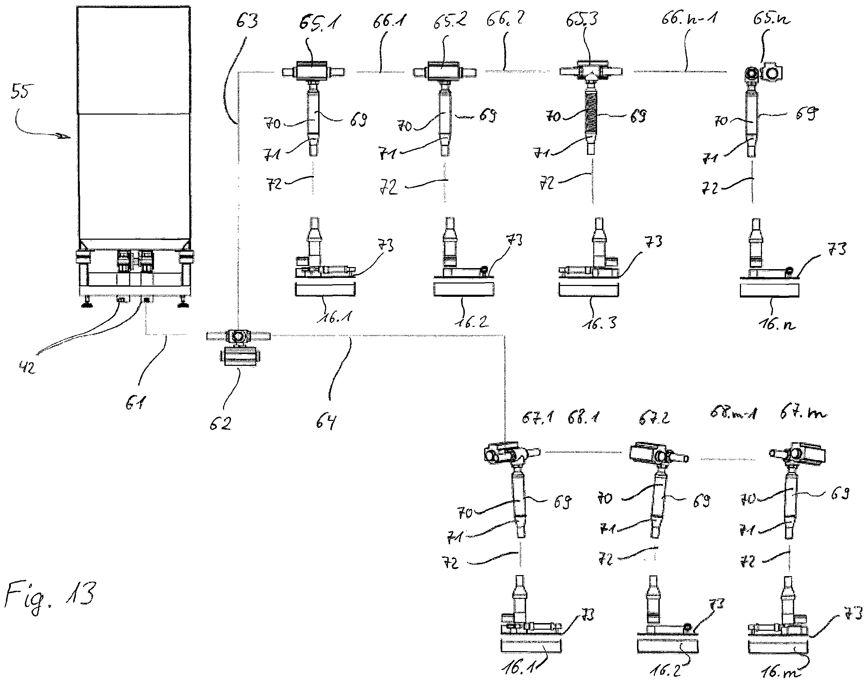

Ferner ist gemäß den vorstehenden Ausführungsbeispielen immer jeder Verarbeitungsstation (Heißklebestation 16) genau eine Übergabekammer 21, 39 bzw. 42 zugeordnet. Alternativ ist es auch möglich, einer Verarbeitungsstation 16 zwei oder mehr Übergabekammern 21, 39 bzw. 42 zuzuordnen. Dieses kann bei sehr schnell laufenden Verarbeitungsstationen 16 mit nur kleinem Tank sinnvoll sein, da dann der Tank aus einer der Übergabekammern 21, 39 bzw. 42 aus dem Zentraltank 10 nachgefüllt wird. Dabei kann auch jeder Übergabekammer 21, 39 bzw. 42 eine eigene oder eine gemeinsame Entlüftungseinrichtung 18 zugeordnet sein, je nach den Erfordernissen. Auch ist es möglich, dass einer Übergabekammer 21, 39 bzw. 42 zwei oder mehr Verarbeitungsstationen 16 zugeordnet sind, die dann mittels Weichen der Übergabekammer 21, 39 bzw. 42 zugeordnet werden. Wichtig ist nur, dass immer nur eine Verarbeitungsstation 16 zur Zeit der Übergabekammer 21, 39 bzw. 42 zugeordnet ist. Eine solche Anordnung ist in Fig. 13 gezeigt, welche auf dem Zentraltank 55 gemäß Fig. 12 basiert und als Übergabekammer die Übergabekammer 42 aus Fig. 10 und 11 aufweist. Konkret gezeigt sind zwei Übergabekammern 42. Selbstverständlich kann der Zentraltank 55 auch mit nur einer Übergabekammer 42 oder auch drei oder mehr Übergabekammern 42 versehen sein.

Von der Übergabekammer 42 geht zunächst eine Stammleitung 61 ab, welche bei einer ersten Weiche 62 in zwei Hauptäste 63 und 64 verzweigt. Die Weiche 62 ist, wie auch alle anderen weiter unten noch zu beschreibenden Weichen, als Drei-Zwei-Wege-Kugelhahn ausgebildet. Das heißt, dem Kugelhahn sind insgesamt drei Leitungen zugeordnet, wobei im vorliegenden Fall jeweils ein Zufluss und zwei Abflüsse vorgesehen sind, nämlich im Fall der Weiche 62 die Stammleitung 61 als Zufluss und die Hauptäste 63 und 64 als Abfluss.

Der Hauptast 63 endet an einer weiteren Weiche 65.1, von der bei einem Abfluss eine Zweigleitung 66.1 abzweigt. Diese mündet wiederum in einer Weiche 65.2, deren einer Abfluss an eine Zweigleitung 66.2 abschließt. Dieses geht so weiter mit einer beliebigen Anzahl n von Weichen. In ähnlicher Weise mündet auch der zweite und gegebenenfalls jeder weitere Hauptast 64 in einer ersten Weiche 67.1, von der eine erste Zweigleitung 68.1 zu einer weiteren Weiche 67.2 führt und so weiter, bis auch hier eine beliebige Anzahl von m Weichen 67 erreicht ist. Die jeweils anderen Abflüsse der Weichen 65 bzw. 67 münden in einer Entlüftungseinrichtung 69, durch welche wieder die zum Transport des Betriebsstoffes aus der Übergabe 42 verwendete Druckluft entfernt wird. Die Entlüftungseinrichtung 69 weist zu diesem Zweck einen rohrartigen, zylindrischen Filter 70 auf, dessen Mantelfläche aus einem Filtermaterial, in einfachsten Fall aus einem Sieb, gebildet ist. Die Maschenweite des Siebes ist dabei so bemessen, dass der Betriebsstoff nicht durch das Sieb hindurchtreten kann, wohl aber die den Betriebsstoff transportierende Luft. Unterhalb des Siebes 70 ist eine trichterartige Verjüngung 71 vorgesehen, welche in ein Fallrohr 72 mündet. Der Innendurchmesser des Fallrohres 72 ist dabei aufgrund der Verjüngung 71 kleiner als der Innendurchmesser des Filters 70. Hierdurch staut sich der Betriebsstoff im Bereich der Verjüngung 71 leicht auf, wird also in seiner Geschwindigkeit verzögert, ohne dass es dabei zu einer vollständigen Verstopfung kommt. Aufgrund des leichten Aufstauens des Betriebsstoffs im Bereich der Verjüngung 71 entweicht die Druckluft durch den Filter 70 und der Betriebsstoff rieselt drucklos zur Verarbeitungsstation 16.

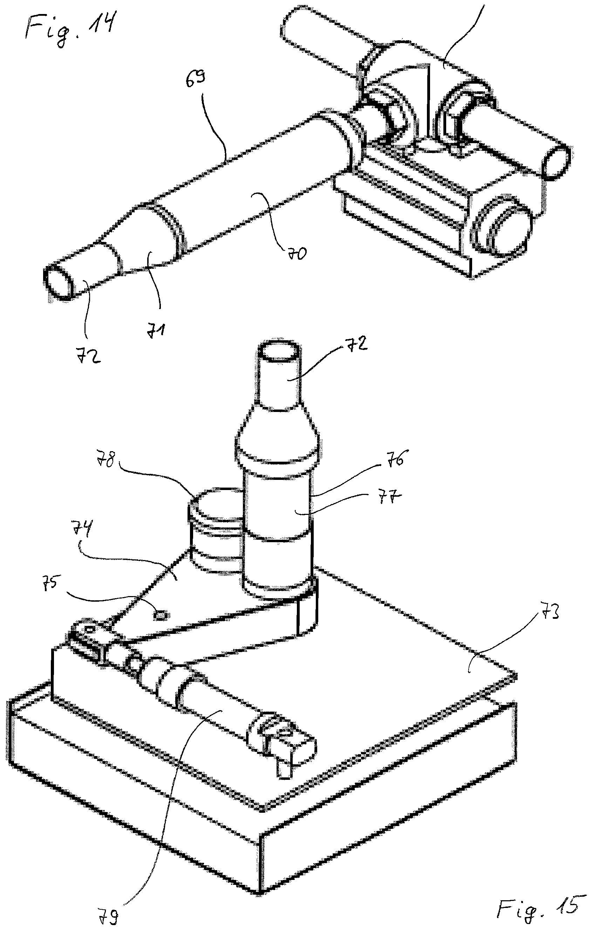

Die Tanks der Verarbeitungsstationen 16 sind in der Regel mit einem Deckel verschlossen. Im Falle von Heißklebemaschinen ist der Deckel sogar isoliert, um das Entweichen von Wärme, welche zum Aufschmelzen des Heißklebers im Tank eingesetzt wird, zu minimieren. Auch im Rahmen der vorliegenden Erfindung sollte deshalb der Tank mit einem Deckel verschlossen sein, wie dies in Fig. 13 durch den Deckel 73 skizziert ist. Der Deckel 73 selbst ist in Fig. 15 näher gezeigt. Der Deckel 73 weist eine in Fig. 15 nicht erkennbare Öffnung auf, durch die der Betriebsstoff hindurchrieseln kann. Diese Öffnung wird durch einen Verschluss 74 verschlossen, der im vorliegenden Fall schwenkbar um eine Achse 75 am Deckel 73 gelagert ist. An dem Verschluss 74 ist eine weitere Entlüftungseinrichtung 76 angeordnet, welche ebenfalls analog der Entlüftungseinrichtung 69 über einen zylindrischen Filter 77 als Mantel verfügt. An dieser Entlüftungseinrichtung 76 schließt oben das Fallrohr 72 an. Bei geöffnetem Verschluss 74 fluchtet die Entlüftungseinrichtung 76 mit der Öffnung im Deckel 73, so dass der Betriebsstoff durch die Öffnung fließen kann. Sobald der Tank gefüllt ist, wird der Verschluss 74 in die geschlossene Position unter elastischer Verformung des Fallrohres 72 geschwenkt. Der Verschluss 74 verschließt nun die Öffnung im Deckel 73.

Aber auch bei geschlossenem Verschluss 74 können Dämpfe aus dem Tank der Verarbeitungsstation entweichen. Hierzu ist dem Verschluss 74 in seiner geschlossenen Position eine Sammeleinrichtung 78 zugeordnet, in welcher die Dämpfe gesammelt und beispielsweise einmal täglich durch Reinigen der Sammeleinrichtung 78 entsorgt werden. Gegebenenfalls kann hier alternativ auch ein Isolierstopfen vorgesehen sein, der bei von der Unterseite isoliertem Deckel 73 in die Öffnung im Deckel 73 eingefahren wird und so für eine durchgängige Isolierung möglichst ohne Wärmebrücken sorgt.

Betätigt wird der Verschluss 74 durch einen Pneumatikzylinder 79 in an sich bekannter Weise.

Es versteht sich, dass die Hauptäste 63 und 64 ihrerseits nicht direkt über die Weichen 65 bzw. 67 mit Verarbeitungsstationen 60 verbunden sein müssen, sondern ihrerseits in weitere Unterarme verzweigen können. Auch kann nur ein einziger Hauptast vorgesehen sein, der dann direkt an die Übergabekammer 42 anschließt. Ferner ist es selbstverständlich auch denkbar, die unterschiedlichen Konzepte der Anordnung gemäß Fig. 1 bzw. Fig. 13 miteinander zu vermischen und demselben Zentraltank zuzuordnen.

### Bezugszeichenliste:

| | | | |
|---|---|---|---|
| 10 | Zentraltank | 45 | Sumpf |
| 11 | Übergabekassetten | 46 | Deckel |
| 12 | Ständer | 47 | Schraubstutzen |
| 13 | Schwingungsdämpfer | 48 | Bolzengewinde |
| 14 | Grundrahmen | 49 | Durchgangsbohrung |
| 15 | Steuerschrank | 50 | Kugelhahn |
| 16 | Heißklebeeinrichtung | 51 | Innengewinde |
| 17 | Zuführleitung | 52 | Betätigungsvorrichtung |
| 18 | Entlüftungseinrichtung | 53 | Druckluftanschluss |
| 19 | Boden | 54 | Druckluftdüse |
| 20 | Übergabekassette | 55 | Zentraltank |
| 21 | Übergabekammer | 56 | Boden |
| 22 | Öffnungen | 57 | Öffnung |
| 23 | Schließeinrichtung | 58 | Boden |
| 24 | Schließstopfen | 59 | Ende |
| 25 | Kolbenstange | 60 | Rütteleinrichtung |
| 26 | Pneumatikzylinder | 61 | Stammleitung |
| 27 | Druckluftöffnung | 62 | Weiche |
| 28 | Zuführrohr | 63 | Hauptast |
| 29 | Gehäuse | 64 | Hauptast |
| 30 | Entlüftungsöffnung | 65 | Weiche |
| 31 | Öffnung | 66 | Zweigleitung |
| 32 | Schließeinrichtung | 67 | Weiche |
| 33 | Schließstopfen | 68 | Zweigleitung |
| 34 | Kolbenstange | 69 | Entlüftungseinrichtung |
| 35 | Pneumatikzylinder | 70 | Filter |
| 36 | Zentraltank | 71 | Verjüngung |
| 37 | Sieb | 72 | Fallrohr |
| 38 | Loch | 73 | Deckel |
| 39 | Übergabekammer | 74 | Verschluss |
| 40 | Einsatz | 75 | Gelenk |
| 41 | Boden | 76 | Entlüftungseinrichtung |
| 42 | Übergabekammer | 77 | Filter |
| 43 | Boden | 78 | Sammeleinrichtung |
| 44 | Bodenfläche | 79 | Pneumatikzylinder |

## Patentansprüche

1. Vorrichtung zum Befüllen von Verarbeitungsstationen (16) mit einem pumpfähigen Betriebsstoff, mit einem Zentraltank (36) für den Betriebsstoff, einer Übergabekammer (39), die dem Zentraltank (36) zugeordnet ist, und einem Zuführrohr (28), das der Übergabekammer (39) zugeordnet ist, derart, dass der Betriebsstoff zunächst vom Zentraltank (36) in die Übergabekammer (39) und von dort durch das Zuführrohr (28) zu einer Verarbeitungsstation (16) förderbar ist, wobei in der Übergabekammer (39) eine auf eine Entnahmeöffnung der Übergabekammer (39) gerichtete Druckmitteldüse (54) angeordnet ist, **dadurch gekennzeichnet, dass** die Übergabekammer (39) mit einem zu der Entnahmeöffnung hin rampenartig schräg abfallenden Boden (41) versehen ist.

2. Vorrichtung zum Befüllen von Verarbeitungsstationen (16) mit einem pumpfähigen Betriebsstoff, mit einem Zentraltank (36) für den Betriebsstoff, einer Übergabekammer (42), die dem Zentraltank (36) zugeordnet ist, und einem Zuführrohr (53), das der Übergabekammer (42) zugeordnet ist, derart, dass der Betriebsstoff zunächst vom Zentraltank (36) in die Übergabekammer (42) und von dort durch das Zuführrohr (53) zu einer Verarbeitungsstation (16) förderbar ist, wobei in der Übergabekammer (42) eine bis in das Zuführrohr (53) hineinragende Druckmitteldüse (54) angeordnet ist, **dadurch gekennzeichnet, dass** die Übergabekammer (42) einen Boden (43) mit einer sich trichterartig zu einem Sumpf (45) hin vertiefenden Bodenfläche (44) aufweist, und dass die Druckmitteldüse (54) im Sumpf (45) angeordnet ist.

3. Vorrichtung nach Anspruch 1 oder 2, **dadurch gekennzeichnet, dass** der Betriebsstoff durch eine, insbesondere verschließbare, Öffnung (22, 57) im Boden (19, 56) des Zentraltanks (36) mittels Schwerkraft in die jeweilige Übergabekammer (39) förderbar ist.

4. Vorrichtung nach Anspruch 3, **dadurch gekennzeichnet, dass** jeder Übergabekammer (39, 42) eine Schließeinrichtung (23, 50) zum Öffnen und Schließen der Öffnung (22, 57) im Boden (19, 56) des Zentraltanks (36) zugeordnet ist.

5. Vorrichtung nach einem der Ansprüche 1 bis 4, **dadurch gekennzeichnet, dass** der Betriebsstoff durch ein Druckmittel, insbesondere Druckluft, von der jeweiligen Übergabekammer (39, 42) zu der Verarbeitungsstation (16) förderbar ist, welches stoßartig in die Übergabekammer (39, 42) eingeblasen wird.

6. Vorrichtung nach Anspruch 5, **dadurch gekennzeichnet, dass** die Dauer der Beaufschlagung der Übergabekammer (39, 42) mit dem Druckmittel gesteuert, insbesondere zeitgesteuert, ist.

7. Vorrichtung nach einem der Ansprüche 2 bis 6, **dadurch gekennzeichnet, dass** der Sumpf (45) als Sackbohrung ausgebildet ist und einen Durchmesser aufweist, der etwa dem Innendurchmesser der Entnahmeöffnung (53) entspricht.

8. Vorrichtung nach einem der Ansprüche 1 bis 7, **dadurch gekennzeichnet, dass** dem Zentraltank (36) eine Rütteleinrichtung zugeordnet ist.

9. Vorrichtung nach einem der Ansprüche 1 bis 8, **dadurch gekennzeichnet, dass** der Zentraltank (36) mittels Trennwänden in zwei oder mehr Untertanks teilbar ist.

10. Vorrichtung nach einem der Ansprüche 1 bis 9, **dadurch gekennzeichnet, dass** der Zentraltank (36) mit einem, insbesondere parallel zu einem Boden (19) des Zentraltanks (36) verlaufenden, Sieb (37) versehen ist.

11. Anordnung zum Befüllen von Verarbeitungsstationen (16) mit einem pumpfähigen Betriebsstoff mit einem Zentraltank (36 für den Betriebsstoff, mit zwei oder mehr Verarbeitungsstationen (16) und einer Zuführleitung (17) zum Zuführen des Betriebsstoffs zu einer der Verarbeitungsstation (16), **gekennzeichnet durch** eine Vorrichtung nach einem der Ansprüche 1 bis 10.

12. Anordnung nach Anspruch 11, **dadurch gekennzeichnet, dass** das Fassungsvolumen der Übergabekammer (39, 42) auf das Fassungsvolumen eines Tanks der Verarbeitungsstation (16) abgestimmt ist.

13. Anordnung nach Anspruch 11 oder 12, **dadurch gekennzeichnet, dass** der Betriebsstoff von der Übergabekammer (39, 42) zunächst in eine Einrichtung (18) zum Abscheiden des Druckmittels und von dort drucklos in den Tank der Verarbeitungsstation (16) förderbar ist.

14. Anordnung nach einem der Ansprüche 11 bis 13, **dadurch gekennzeichnet, dass** dem Zentraltank (36) zwei oder mehr Übergabekammern (39, 42) zugeordnet sind, wobei jeder Übergabekammer (39, 42) jeweils eine Verarbeitungsstation (16) zugeordnet ist.

15. Anordnung nach einem der Ansprüche 11 bis 14, **dadurch gekennzeichnet, dass** der Übergabekammer (39, 42) zwei oder mehr Verarbeitungsstationen (16) zugeordnet sind, wobei die Übergabekammer (39, 42) mittels Weichen (62, 65, 67) immer mit einer konkreten Verarbeitungsstation (16) verbunden ist.

## Claims

1. Device for filling processing stations (16) with a pumpable working material, with a central tank (36) for the working material, with a transfer chamber (39) associated with the central tank (36), and with a feed line (28) associated with the transfer chamber (39), such that the working material can be first conveyed from the central tank (36) into the transfer chamber (39) and from there through the feed line (28) to a processing station (16), wherein in said transfer chamber (39) there is arranged a pressurising-medium nozzle (54) that is directed towards a discharge opening of the transfer chamber (39), **characterised in that** the transfer chamber (39) is equipped with a floor (41) that slopes down in the manner of a ramp towards the discharge opening.

2. Device for filling processing stations (16) with a pumpable working material, with a central tank (36) for the working material, with a transfer chamber (42) associated with the central tank (36), and with a feed line (53) associated with the transfer chamber (42), such that the working material can be first conveyed from the central tank (36) into the transfer chamber (42) and from there through the feed line (53) to a processing station (16), wherein in said transfer chamber (42) there is arranged a pressurising-medium nozzle (54) that protrudes into the feed line (53), **characterised in that** the transfer chamber (42) possesses a floor (43) with a floor surface (44) that deepens in the manner of a funnel towards a sump (45), and that the pressurising-medium nozzle (54) is arranged in the sump (45).

3. Device according to claim 1 or 2, **characterised in that** the working material is conveyable by means of gravity through an, in particular sealable, opening (22, 57) in the floor (19, 56) of the central tank (36) into the relevant transfer chamber (39).

4. Device according to claim 3, **characterised in that** a closing mechanism (23, 50) for opening and closing the opening (22, 57) in the floor 19, 56) of the central tank (36) is associated with each transfer chamber (39, 42).

5. Device according to one of claims 1 to 4, **characterised in that** the working material is conveyable from the relevant transfer chamber (39, 42) to the processing station (16) by a pressurising medium, in particular compressed air, which is injected abruptly into the transfer chamber (39, 42).

6. Device according to claim 5, **characterised in that** the duration of the admission flow with the pressurising medium to the transfer chamber (39, 42) is controlled, particularly time-controlled.

7. Device according to one of claims 2 to 6, **characterised in that** the sump (45) is designed as a blind bore and has a diameter that corresponds approximately to the inner diameter of the discharge opening (53).

8. Device according to one of claims 1 to 7, **characterised in that** a vibration unit is associated with the central tank (36).

9. Device according to one of claims 1 to 8, **characterised in that** the central tank (36) is divisible into two or more sub-tanks by means of partition walls.

10. Device according to one of claims 1 to 8, **characterised in that** the central tank (36) is equipped with a screen (37) that runs in particular parallel to a floor (19) of the central tank (36).

11. Arrangement for filling processing stations (16) with a pumpable working material, with a central tank (36 for the working material, with two or more processing stations (16) and a feed line (17) for feeding the working material to one of the processing stations (16), **characterised by** a device according to one of claims 1 to 10.

12. Arrangement according to claim 11, **characterised in that** the volume capacity of the transfer chamber (39, 42) is matched to the volume capacity of a tank of the processing station (16).

13. Arrangement according to claim 11 or 12, **characterised in that** the working material is conveyable from the transfer chamber (39, 42) firstly into a unit (18) for separating the pressurising medium and from there is pressurelessly conveyable into the tank of the processing station (16).

14. Arrangement according to one of claims 11 to 13, **characterised in that** two or more transfer chambers (39, 42) are associated with the central tank (36), wherein a processing station (16) is associated with each transfer chamber (39, 42).

15. Arrangement according to one of claims 11 to 14, **characterised in that** two or more processing stations (16) are associated to the transfer chamber (39, 42), wherein the transfer chamber (39, 42) is always connected to a precise processing station (16) by means of switches (62, 65, 67).

## Revendications

1. Dispositif servant à remplir des stations de traitement (16) d'un carburant pouvant être pompé, avec un réservoir central (36) pour le carburant, une chambre de transfert (39), qui est associée au réservoir central (36), et un tube d'amenée (28), qui est associé à la chambre de transfert (39) de telle manière que le carburant peut être refoulé d'abord depuis le réservoir central (36) dans la chambre de transfert (39) et, de là, par le tube d'amenée (28) vers une station de traitement (16), dans lequel une buse de moyen sous pression (54) dirigée sur une ouverture de prélèvement de la chambre de transfert (39) est disposée dans la chambre de transfert (39), **caractérisé en ce que** la chambre de transfert (39) est pourvue d'un fond (41) tombant à l'oblique à la manière d'une rampe en direction de l'ouverture de prélèvement.

2. Dispositif servant à remplir des stations de traitement (16) d'un carburant pouvant être pompé, avec un réservoir central (36) pour le carburant, une chambre de transfert (42), qui est associée au réservoir central (36), et un tube d'amenée (53), qui est associé à la chambre de transfert (42) de telle manière que le carburant peut être refoulé d'abord depuis le réservoir central (36) dans la chambre de transfert (42) et, de là, par le tube d'amenée (53) en direction d'une station de traitement (16), dans lequel une buse de moyen sous pression (54) dépassant jusque dans le tube d'amenée (53) est disposée dans la chambre de transfert (42), **caractérisé en ce que** la chambre de transfert (42) présente un fond (43) pourvu d'une surface de fond (44) s'enfonçant à la manière d'un entonnoir en direction d'un puisard (45), et que la buse de moyen sous pression (54) est disposée dans le puisard (45).

3. Dispositif selon la revendication 1 ou 2, **caractérisé en ce que** le carburant peut être refoulé par une ouverture (22, 57), pouvant en particulier être fermée, dans le fond (19, 56) du réservoir central (36) au moyen de la force d'inertie dans la chambre de transfert (39) respective.

4. Dispositif selon la revendication 3, **caractérisé en ce qu'**un système de fermeture (23, 50) servant à ouvrir et à fermer l'ouverture (22, 57) dans le fond (19, 56) du réservoir central (36) est associé à chaque chambre de transfert (39, 42).

5. Dispositif selon l'une quelconque des revendications 1 à 4, **caractérisé en ce que** le carburant peut être refoulé par un moyen sous pression, en particulier de l'air comprimé, de la chambre de transfert (39, 42) respective en direction de la station de traitement (16), lequel peut être soufflé par à-coups dans la chambre de transfert (39, 42).

6. Dispositif selon la revendication 5, **caractérisé en ce que** la durée de l'exposition de la chambre de transfert (39, 42) à l'action du moyen sous pression est commandée, en particulier est commandée dans le temps.

7. Dispositif selon l'une quelconque des revendications 2 à 6, **caractérisé en ce que** le puisard (45) est réalisé en tant que trou borgne et présente un diamètre qui correspond environ au diamètre intérieur de l'ouverture de prélèvement (53).

8. Dispositif selon l'une quelconque des revendications 1 à 7, **caractérisé en ce qu'**un système agitateur est associé au réservoir central (36).

9. Dispositif selon l'une quelconque des revendications 1 à 8, **caractérisé en ce que** le réservoir central (36) peut être divisé au moyen de cloisons de séparation en deux sous-réservoirs ou plus.

10. Dispositif selon l'une quelconque des revendications 1 à 9, **caractérisé en ce que** le réservoir central (36) est pourvu d'un tamis (37) s'étendant en particulier de manière parallèle par rapport à un fond (19) du réservoir central (36).

11. Ensemble servant à remplir des stations d'usinage (16) d'un carburant pouvant être pompé, avec un réservoir central (36) pour le carburant, deux stations de traitement (16) ou plus et un conduit d'amenée (17) servant à amener le carburant à l'une des stations de traitement (16), **caractérisé par** un dispositif selon l'une quelconque des revendications 1 à 10.

12. Ensemble selon la revendication 11, **caractérisé en ce que** la capacité de la chambre de transfert (39, 42) est adaptée à la capacité d'un réservoir d'une station de traitement (16).

13. Ensemble selon la revendication 11 ou 12, **caractérisé en ce que** le carburant peut être refoulé depuis la chambre de transfert (39, 42) d'abord dans un système (18) servant à séparer le moyen sous pression et, de là, sans pression dans le réservoir de la station de traitement (16).

14. Ensemble selon l'une quelconque des revendications 11 à 13, **caractérisé en ce que** deux chambres de transfert (39, 42) ou plus sont associées au réservoir central (36), dans lequel respectivement une station de traitement (16) est associée à chaque chambre de transfert (39, 42).

15. Ensemble selon l'une quelconque des revendications 11 à 14, **caractérisé en ce que** deux stations de traitement (16) ou plus sont associées à la chambre de transfert (39, 42), dans lequel la chambre de transfert (39, 42) est toujours reliée à une station de traitement (16) concrète au moyen d'aiguillages (62, 65, 67).
